# EUROPEAN PATENT APPLICATION

(11) **EP 1 643 713 A1**
(43) Date of publication of application: **05.04.2006**
(21) Application number: 04300651.9
(22) Date of filing: 04.10.2004
(51) Int. Cl.: H04L 29/06, G06F 9/46

(54) **Distributed Computing**

(71) Applicant: Hewlett-Packard Development Company, L.P., Houston, TX 77070 (US)
(72) Inventor: Bouat, Sebastien, 38410 St Martin d'Uriage (FR)
(74) Representative: Lloyd, Richard Graham

(57) **Abstract**

According to one embodiment of the present invention, there is provided a method of establishing a communication path between a plurality of software elements in a distributed computing system, the elements being operable for communicating using a first communication mode, and wherein at least some of the software elements are also operable for communicating using a second communication mode. The method may comprise a first software element discovering a second software element, entering an initiation phase between the first and the second software element using the first communication mode and determining, during the initiation phase, whether the first and second software element may communicate using more than one communication mode, and where it is so determined, determining a preferred communication mode based on a predetermined communication characteristic. A communication may then be established using the determined preferred communication mode.

## Description

The present invention relates to the field of distributed systems, such as distributed computing systems comprising multiple software elements distributed across one or more computing devices.

Distributed computing systems are widely used in many different fields, such as banking, security and telecommunications. Such systems typically comprise multiple software elements, or objects, each designed to perform a specific function or set of functionality. A distributed computing system providing a specific service thus requires that each of the software elements in the system communicate, exchange, and process data in order to provide that service. For example, a telecommunications network may comprise software elements such as a service execution application, telecommunication stack s, intelligent switches, and so on. The functionality of a service control platform of a telecommunication network, for example, may be provided when a suitable service execution application is paired with a suitable telecommunication stack in a suitable manner.

Depending on the particular network configuration such software elements may be hosted either by a single computing device or, more commonly, by multiple computing devices.

In order for a distributed computing system to be established, the different software elements making up the system need to communicate with other software elements in the system. In order to communicate, each software element needs to know of the existence and availability of other software elements in the system, as well as how the communication between those software elements should be established.

Current solutions achieve this in various ways. One approach is to hard code or configure, in each software element, the information regarding the other software elements in the system. For example, in a telecommunications environment a service execution application element would need configuring so that it knows of the existence of a telecom stack application, the address or communication path through which the telecom stack application may be contacted and the protocol to be used for the communications. Similarly, the telecom stack application would need configuring with similar information relating to the service execution application element. All other software elements in the system would likewise require appropriate configuration. This approach, however, is somewhat inflexible, since if, for example, one software element is moved to a different computing device, or if an element is no longer available, all of the other software elements that communicate with the moved software element would require reconfiguring. Furthermore, in complex systems such as telecommunication systems, such reconfiguration may require the system to be restarted. This is somewhat undesirable in telecommunication and other 'always on' systems where it is highly desirable to minimize unnecessary downtime.

An alternative approach to preconfiguring each software element is to use automatic discovery of other software elements in a system. Discovery enables a software element to discover other available software elements in a system and to use configuration information obtained during discovery to configure each software element to enable communication to take place between the different software elements.

Many distributed computing systems use an approach known as the common object request broker architecture, more commonly known as CORBA. CORBA provides architecture in which software objects are designed having a tightly defined externally visible CORBA interface. CORBA objects may communicate with each other using the defined interface, and all CORBA communications are handled by an object request broker (ORB).

Although widely used, CORBA has numerous disadvantages. Firstly, all communications between software objects using CORBA go through an ORB. Not surprisingly, this may introduce performance problems, especially in real-time type systems where high performance is an important consideration. Secondly, CORBA is a non-pervasive system which requires industrial CORBA framework applications, such as ORBs, to be installed on each system using CORBA objects. This may add considerable cost to the deployment of a distributed computing system.

There also exist numerous proprietary systems which provide discovery and negotiation features for use in distributed computing systems, but use of proprietary systems may prove expensive and lead to inflexibility due to system administrators being locked-in to specific system vendors.

Accordingly, one aim of the present invention is to overcome, or at least alleviate, at least some of the above-mentioned problems.

According to a first embodiment of the present invention, there is provided a method of establishing a communication path between a plurality of software elements in a distributed computing system, the elements being operable for communicating using a first communication mode, and wherein at least some of the software elements are also operable for communicating using a second communication mode. The method may comprise a first software element discovering a second software element, entering an initiation phase between the first and the second software element using the first communication mode and determining, during the initiation phase, whether the first and second software element may communicate using more than one communication mode, and where it is so determined, determining a preferred communication mode based on a predetermined communication characteristic. A communication may then be established using the determined preferred communication mode.

The method is preferably adapted for use with the session initiation protocol (SIP).

SIP has been designed primarily for use in telecommunications systems, such as telephony and instant messaging systems. However, it has been advantageously realized by the Applicants that SIP lends itself particularly well to the establishment of communication paths between software elements in a distributed computing environment. A further advantage of SIP is that SIP stacks are widely available for little or no cost. Furthermore, use of SIP in place of other commercial or proprietary systems may lead to significant reductions in both cost and development time of distributed computer systems.

Suitably, the step of determining further comprises determining the preferred communication mode according to the performance of the communication mode.

The step of discovering may use an intermediate element, such as a presence server, and may further comprise the first and second element each registering to the presence server, the presence server sending a notification to the first element when it is determined that the second element has registered with the presence server. When the first element receives the notification, the method comprises entering the initiation phase during which one of the first and second elements sends to the other one of the first and second elements a message containing details of one or more communication modes supported by that element, and wherein said other element chooses a preferred communication mode from the one or more communications modes.

Suitably the method is adapted to the Session Initiation Protocol (SIP). Where SIP, is used the step of registering to the presence server preferably comprises sending a SIP *REGISTER* message to the present server.

Suitably, the first element sends a SIP *SUBSCRIBE* message containing details of the second element to the presence server.

The method may further comprise receiving the notification from the presence service, the notification being in the form of a SIP *NOTIFY* message containing address details of the second element.

The step of entering the initiation phase may be entered by one of the first or second element sending a SIP message containing a session description protocol descriptor containing details of communication modes available to that element.

Once the communication path is established, the first and second devices may communicate with one another.

According to a second aspect of the present invention there is provided a software element of a distributed computing system operating in accordance with the above-described method.

According to a third aspect of the present invention, there is provided a distributed computing system arranged to operate in accordance with the above-described method.

The invention will now be described, by way of example only, with reference to the accompanying drawings, in which:
Figure 1 is a block diagram of a distributed computing system 100 according to an embodiment of the present invention; and
Figure 2 is a message flow diagram showing example session initiation protocol (SIP) messages which may be sent during the operation of the system 100 of Figure 1.

Over recent years a new telecommunications protocol known as the Session Initiation Protocol (SIP) has been developed by the Internet Engineering Task Force (IETF). SIP is defined in IEFT RFC 3261 as an application-layer control and signaling protocol for creating, modifying, and terminating sessions with one or more participants. These sessions include Internet telephone calls, multimedia distribution, and multimedia conferences.

SIP has been specifically developed for use in advanced telecommunications networks, particularly telephony systems, and today is deployed widely in so-called instant messaging systems as well as well as being extensively used in many voice over Internet protocol (VoIP) systems.

The embodiments of the present invention described below are based on a realization that the functionality and services provided by SIP are not necessarily limited for use in telecommunication systems for creating and managing multimedia sessions, and may, in certain circumstances, be adapted to be of particular use in domains such as distributed computing, as described in greater detail below.

Furthermore, unlike CORBA and other proprietary systems, SIP is an open standard and is becoming pervasive. For instance, many modern computer operating systems, such as Microsoft Corporation's Windows XP operating system, include a SIP stack. The SIP stack in Windows XP is used, for example, to provide instant messaging functionality to users of Microsoft's Windows as well as voice over IP services using, for example, Microsoft's Windows Messenger. For operating systems which do not include a SIP stack as standard, there are typically various open source and low cost SIP stacks available.

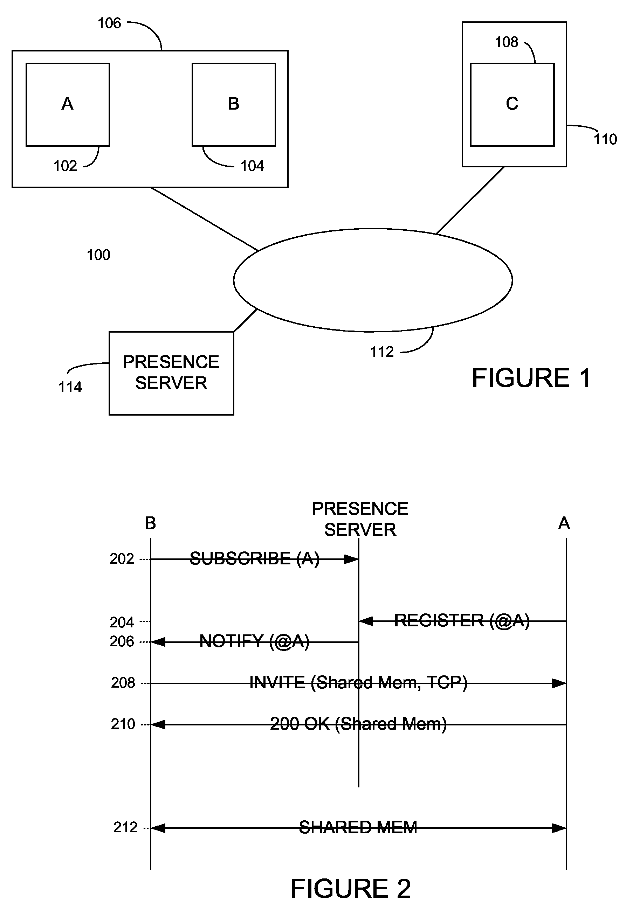

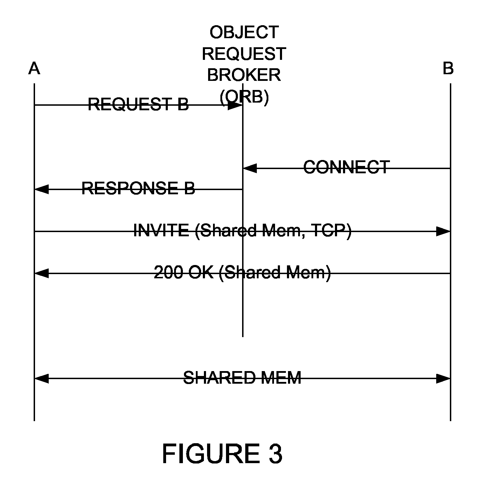

Referring now to Figure 1 there is a shown a block diagram of a distributed computing system 100 according to an embodiment of the present invention. A computer device 106, such as a personal computer or enterprise computer server, hosts a number of software elements 102 and 104. A computing device 110 hosts a further software element 108. The computing devices 106 and 110 are connectable by way of a network 112. The network 112 may, for instance, be a suitable Internet protocol (IP) network.

The software elements 102, 104 and 108 are part of a distributed processing system. In other words each of the software elements may need, at different times, to communicate with one or more of the other software elements in the system to provide some predetermined processing function. As previously mentioned, one of the software elements may be a telecommunication stack and another software element may be a service execution application of a telecommunication network.

In order for each of the software elements to discover the other software elements in the system, the system 100 makes use of the session initiation protocol (SIP), as will be explained in further detail below.

An intermediate element 114, such as a SIP registrar/presence server, and connected to the network 112 is used to keep an up-to-date record of the presence status and addressing data for each of the software elements 102, 104 and 108, and thereby allows software elements in the distributed processing system to discovery each other. In this context, discovery may include discovering an address or other identification parameter associated with a software element, and discovering the availability of a software element, for example by way of a presence status.

Figure 1 shows the presence server 114 as being provided by a separate computing device to computing devices 106 and 110 but it could equally be hosted by computing device 106 or 110.

The registrar/presence server 114 is a SIP registrar/presence server which, in response to **SIP** *REGISTER* messages sent by each of the software elements 102, 104 and 108, maintains a record of the current presence status and address of each of the software elements. The presence status may indicate one or more actual states of each software element, for example, "available", "not available", "busy", and so on.

The presence status of each software element is set in the presence/registrar server 114 by way of a *REGISTER* message, sent periodically by each of the software elements. The messages may be sent using a SIP stack (not shown) hosted by each of the computing devices 106, 110 and 114.

An example embodiment relating to a telecommunications network will now be given with additional reference to Figure 2, which is a message flow diagram showing example messages which may flow between different elements of the system of Figure 1. In the following example software elements 102 and 108 represent telecommunication stack s and software element 104 represents a service execution application.

An essential element of many telecommunication networks, such as an SS7 network, is a service control platform (SCP). An SCP may be composed, for example, of a suitable telecommunication stack and a suitable service execution application. The following example outlines how an SCP may be formed of a suitable telecom stack and a suitable service execution application.

When each of the software elements 102, 104 and 108 are initialized they each send a *REGISTER* message to the presence/registrar server 114 giving addressing information and a logical name for each software element. The logical name facilitates the identification of a software element by other software elements, and the addressing information contains the current addresses, for example an Internet Protocol address, at which the element is reachable.

In order for the service execution application 104 to know when the telecommunication stack 102 is available the service execution application 104 sends a SIP *SUBSCRIBE* message 202 to the registrar/presence server 114 giving the logical name of the telecommunication stack 102. By doing so, the registrar/presence server 114 will inform the telecommunications stack 102 of changes in the presence status of the telecommunication stack 102.

When the telecommunication stack 102 is initialized it sends a *REGISTER* message 204 to the registrar/presence server 114. The presence server 114 determines that the service execution application 104 has subscribed to be updated of changes in status of the telecommunication stack 102 and sends a SIP *NOTIFY* message 206 to the service execution application 104. The *NOTIFY* message contains the IP address of the telecommunication stack 102.

Once the service execution application 104 receives the *NOTIFY* message it knows the IP address of the telecommunication stack 102 allowing the service execution application 104 to establish a communication path with the telecommunication stack 102. The communication is initiated by the service execution application 104 sending a SIP *INVITE* message 208 directly to the telecommunication stack 102 using the address contained in the *NOTIFY* message.

SIP messages may contain a session description protocol (SDP) descriptor which is used in the telecommunications applications for which SIP was developed for the negotiation of a media channel. An SDP descriptor contains details of one or more media capabilities supported by the element sending the message containing the SDP. The media capabilities may include supported media, such as voice and video, supported audio codecs, supported video codecs, and so on.

When a communication is established between two SIP elements, the negotiation of media characteristics may take place in one of two ways.

In a first negotiation mode, when a calling SIP phone makes a call to a called SIP phone the calling phone includes a SDP descriptor in the initial *INVITE* message. The SDP descriptor contains details of at least some of the media capabilities supported by the calling phone. Upon receipt of the *INVITE* message the called SIP phone determines, from the media characteristics contained in the received SDP descriptor, one or more preferred media characteristics, details of which are included in a *200 OK* response message sent back to the calling phone. Upon receipt of this, the calling phone then establishes a session using the media characteristics chosen by the called phone.

In a second negotiation mode, the calling phone does not include an SDP descriptor in the initial *INVITE* message sent to the called phone. Upon receipt of the *INVITE* message the called phone responds with a *200 OK* message containing an SDP descriptor containing details of at least some of the media characteristics supported by the called phone. The calling phone, upon receipt of the SDP descriptor , determines one or more preferred media characteristics contained in the SDP descriptor, and establishes a session accordingly.

The present embodiment expands on the mechanism provided by the SIP SDP descriptor to provide a mechanism suitable for negotiating communication parameters between two software elements in a distributed processing environment.

The service execution application 104 supports, for example, communication using the transport control protocol (TCP) over the IP network 112, thereby enabling the service execution application 104 to be accessed by remote software elements over the IP network 112. The service execution application 104 also supports communication using shared memory for other software elements, such as the telecommunication stack 102, hosted by the same computing device.

The SIP *INVITE* message 208 contains a modified SDP descriptor which details at least some of the different communications modes supported by the software execution application 104.

The telecommunication stack 102 receives the *INVITE* message 208 and analyzes the SDP descriptor contained therein to choose, where a choice exists, one of the proposed communication modes. A communication mode may include a communication path or channel, a communication protocol, and/or other communication parameters.

The choice of communication mode is preferably made based on a predetermined communication characteristic, such as the efficiency of the different communication modes. For instance, in the present case, since the telecom stack 102 and the service execution application 104 are hosted by the same computing device 106 it is clearly preferably, from a performance perspective, to choose the shared memory communication mode as the communication speed will be greater than over an IP network. Suitably, the SDP descriptor contains one or more memory addresses which make up the shared memory to be used for communicating, and may also include details of the communication protocol which should be used. The preferred communication characteristic may also relate to other characteristics, such as security, reliability and the like, depending on the particular software element in question. For example, one software element may prefer a secure communication path over a fast communication path, whereas another software element may prefer a reliable path over a fast path.

Once the telecommunication stack 102 has chosen a communication mode, it responds by sending a SIP 200 *OK* message 210, including in the SDP descriptor details of the chosen communication mode.

Upon receipt of this message by the telecom stack 102, the service execution application establishes a communication path with the telecommunication stack 102 based on the chosen communications mode, in this case through shared memory. Once the communication path is established, the software elements may exchange and process data in an appropriate manner depending on the processing and functional operation of each element.

Alternatively, the second negotiation mode detailed above may be used.

If the service execution application 104 had wished to form an SCP using the telecommunication stack 108, instead of the telecommunication stack 102, the application 104 would have still included both TCP/IP and shared memory details in the SDP of the initial *INVITE* message 208. In this case, however, the telecommunication stack 108 would have realized that communication through shared memory was not possible and would have responded by including details to enable a TCP/IP connection to be established. If, for example, service execution application 104 and telecommunication stack 108 are accessible through the same local area network 112 the communications mode negotiation may result in local addresses being used rather than publicly available addresses, again helping to improve performance.

In this way, a communication mode negotiation is performed which can be used to maximize performance by choosing the most appropriate communication mode. Furthermore using SIP as a framework in a distributed computing environment brings a multitude of advantages. For example, SIP is widely available, low-cost and reliable ad provides inherent support for a host of other features such as security and high-availability.

## Claims

1. A method of establishing a communication path between a plurality of software elements in a distributed computing system, the elements being operable for communicating using a first communication mode, and wherein at least some of the software elements are also operable for communicating using a second communication mode,
the method comprising:
a first software element discovering a second software element;
entering an initiation phase between the first and the second software element using the first communication mode;
determining, during the initiation phase, whether the first and second software element may communicate using more than one communication mode, and where it is so determined, determining a preferred communication mode based on a predetermined communication characteristic; and
establishing the communication using the determined preferred communication mode.

2. The method of claim 1, wherein the step of determining further comprises determining the preferred communication mode where the predetermined communication characteristic is at least one of performance, security and reliability.

3. The method of claim 1 or 2, wherein the intermediate element is a presence server, the method further comprising:
the first and second software elements each registering to the presence server;
the presence server sending a notification to the first element when it is determined that the second element has registered with the presence server; and
upon the first element receiving the notification, entering the initiation phase during which one of the first and second elements sends to the other one of the first and second elements a message containing details of one or more communication modes supported by that element, and wherein said other element chooses a preferred communication mode from the one or more communications modes.

4. The method of claim 3, wherein the first and second software element use the Session Initiation Protocol, and wherein the step of registering to the presence server comprises sending a SIP *REGISTER* message to the present server.

5. The method of claim 3 or 4, further comprising the first software element sending a SIP *SUBSCRIBE* message containing details of the second software element to the presence server.

6. The method of claims 3, 4 or 5, further comprising receiving the notification from the presence service, the notification being in the form of a SIP *NOTIFY* message containing address details of the second software element.

7. The method of claims 4, 5, or 6, wherein the step of entering the initiation phase is entered by one of the first or second software element sending a SIP message containing a session description protocol descriptor containing details of communication modes available to that software element.

8. The method of any previous claim, further comprising the first and second software element communicating with one another over the established communication path.

9. A software element of a distributed computing system operating in accordance with any of the claims 1 to 8.

10. A distributed computing system comprising one or more software elements as claimed in claim 9.
